Europäisches Patentamt

European Patent Office

Office européen des brevets

(11) Publication number: **0 464 550 A2**

# EUROPEAN PATENT APPLICATION

(21) Application number: **91110365.3**

(51) Int. Cl.⁵: **G06F 1/16**, G06F 3/06

(22) Date of filing: **24.06.91**

(30) Priority: **25.06.90 JP 166213/90**

(43) Date of publication of application:
**08.01.92 Bulletin 92/02**

(84) Designated Contracting States:
**DE FR GB**

(71) Applicant: **Kabushiki Kaisha Toshiba
72, Horikawa-cho Saiwai-ku
Kawasaki-shi(JP)**

(72) Inventor: **Ando, Makoto, c/o Intellectual
Property Div.
Kabushiki Kaisha Toshiba, 1-1 Shibaura
1-chome
Minato-ku, Tokyo 105(JP)**
Inventor: **Suzuki, Yoshiaki, c/o Intellectual
Property Div.**
Kabushiki Kaisha Toshiba, 1-1 Shibaura
1-chome
Minato-ku, Tokyo 105(JP)
Inventor: **Yamanaka, Yuji, c/o Intellectual
Property Div.**
Kabushiki Kaisha Toshiba, 1-1 Shibaura
1-chome
Minato-ku, Tokyo 105(JP)
Inventor: **Akashi, Kazuo, c/o Intellectual
Property Div.**
Kabushiki Kaisha Toshiba, 1-1 Shibaura
1-chome
Minato-ku, Tokyo 105(JP)

(74) Representative: **Henkel, Feiler, Hänzel &
Partner
Möhlstrasse 37
W-8000 München 80(DE)**

(54) **A computer system having storage devices.**

(57) Instead of a computer system having two floppy disk drives (32A, 32B), a computer system having a floppy disk drive (32A) and a hard disk drive (100) is constructed to advance the computer system. The computer system has two floppy disk drive connectors (60, 61) for internally connecting the two floppy disk drives (32A, 32B) and a hard disk drive connector (42) for internally connecting a hard disk drive (100). Therefore, in the construction, one of the two floppy disk drives (32A, 32B) is disconnected from one of the floppy disk drive connectors (60, 61) of the computer system, the hard disk drive (100) is connected to the hard disk drive connector (42) of the computer system instead of the disconnected floppy disk drive (32A; 32B), and is internally set in a computer body.

F I G. 1

EP 0 464 550 A2

The present invention relates to a computer system having a plurality of storage devices.

Various portable lap-top type personal computers which can be driven by batteries have recently been developed. These personal computers each include a magnetic recording device such as a floppy disk drive and a hard disk drive.

In order to advance the system of such a lap-top type personal computer, a magnetic recording device such as a floppy disk drive and a hard disk drive is externally set. Since, therefore, the externally-set magnetic recording device needs to coupled to the personal computer body, the characteristics of the lap-top type computer, such as miniaturization, lightness and portability are lost. Since a connector and a cable are used to couple the externally-set magnetic recording device to the personal computer body, the manufacturing cost of the computer increases and the reliability thereof decreases.

Consequently, apparatus capable of advancing a personal computer is demanded.

It is an object of the present invention to provide a computer system having a plurality of storage devices.

According to one aspect of the present invention, there is provided a computer system comprising: a computer body having two floppy disk connectors and a hard disk connector; and at least one floppy disk drive connected to at least one of the floppy disk connectors and included in the computer body, and wherein when a hard disk drive is to be connected to the hard disk connector and two floppy disk drives have connected to the floppy disk connectors, one of the floppy disk drives is disconnected from one of the floppy disk connectors to which the one floppy disk drive has connected, the disconnected floppy disk drive is removed from the computer body, and the hard disk drive is connected to the hard disk connector and set in the computer body.

According to another aspect of the present invention, there is provided a computer system comprising: a computer body; and at least one floppy disk drive housed in the computer body, and wherein when a hard disk drive is to be housed in the computer body and two floppy disk drives have housed in the computer body, one of the housed floppy disk drives is removed from the computer body, the hard disk drive is set into a space in which the floppy disk drive to be removed has housed.

This invention can be more fully understood from the following detailed description when taken in conjunction with the accompanying drawings, in which:

Fig. 1 is a block diagram showing a configuration of a computer system according to an embodiment of the present invention;

Fig. 2 is a perspective view showing an appearance and configuration of the computer system in which a display is opened;

Fig. 3 is a perspective view showing an appearance of the computer system in which the display is closed;

Fig. 4 is a view showing an arrangement of two floppy disk drives included in a computer system;

Fig. 5 is a view showing an arrangement of a floppy disk drive and a hard disk drive included in the computer system;

Fig. 6 is a view showing an appearance of a floppy disk drive; and

Fig. 7 is a view showing an appearance and a configuration of a hard disk drive.

An embodiment of the present invention will be described with reference to the accompanying drawings.

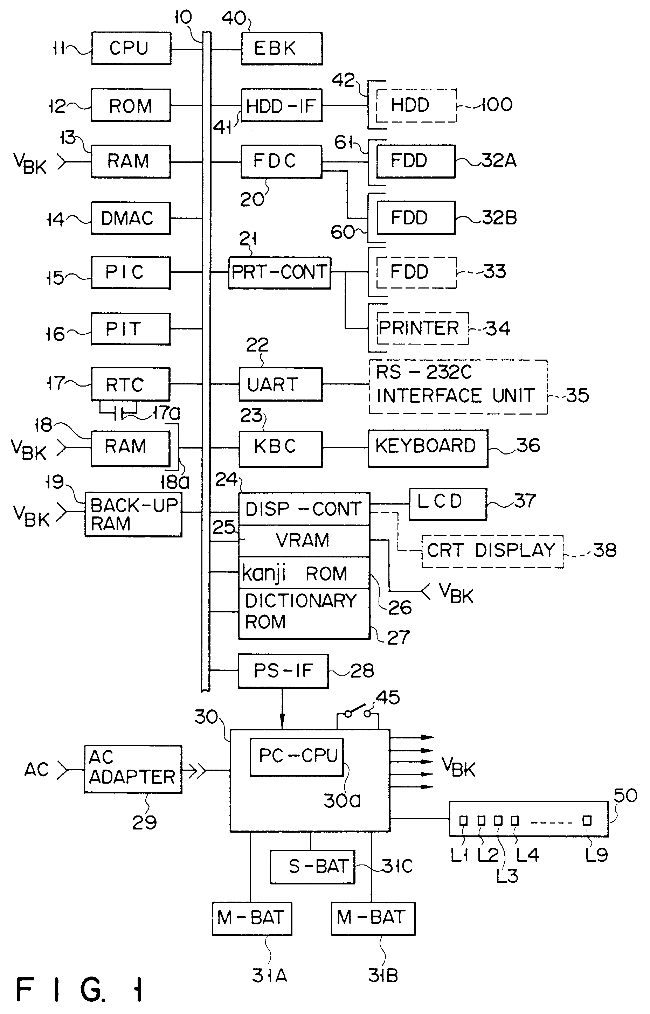

Fig. 1 is a block diagram showing a configuration of a computer system according to an embodiment of the present invention. The computer system shown in Fig. 1 comprises a system bus 10, a central processing unit (CPU) 11 for controlling the entire computer system, a read only memory (ROM) 12 for storing control programs for the computer system, pop-up menu data, and the like, a random access memory (RAM) 13 for storing data to be processed, a direct memory access controller (DMAC) 14 for direct memory access control, a programmable interrupt controller (PIC) 15 which can be set by programs, a programmable interval timer (PIT) 16 which can be set by programs, a real time clock (RTC) 17 used as a timer module and having a driving battery 17a, a large-capacity extended RAM 18 connectable to a card slot 18a, and a backup RAM 19 for storing data or the like to execute a resume process.

The computer system also comprises a floppy disk controller (FDC) 20. Floppy disk drives 32A and 32B are connected to the FDC 20 by connectors 61 and 60, respectively and controlled by the FDC 20. Instead of the 3.5-inch floppy disk drive 32B, a hard disk drive of, for example, 2.5 inches can be coupled to the computer system of the present invention. Accordingly, the computer system can be easily advanced. The method of coupling the hard disk drive to the computer system will be described later.

The computer system further comprises a printer controller (PRT-CONT) 21, a universal asynchronous receiver/transmitter (UART) 22 used as an input and output interface, a keyboard controller (KBC) 23, a display controller (DISP-CONT) 24, a video RAM (VRAM) 25, a kanji ROM 26, a dictionary ROM 27, a power supply interface (PS-IF) 28, an alternating current (AC) adapter 29, a power supply circuit 30 having a power control CPU (PC-CPU) 30a, main batteries (M-BAT) 31A and 31B, a sub-battery (S-BAT) 31C, a keyboard 36, a liquid crystal display (LCD) 37, and power switch 45.

A 5-inch externally-set floppy disk drive 33 and a printer 34 are selectively coupled to the PRT-CONT 21 by a connector. An RS-232C interface unit 35 is connected to the UART 22, if necessary. The KBC 23 controls a key input from the keyboard 36 arranged on the computer system body.

The DISP-CONT 24 controls the swingable LCD 37 attached to the computer system body, or a cathode ray tube (CRT) display 38 selectively connected to the DISP-CONT 24. A backup voltage $V_{BK}$ is applied to the VRAM 25. The kanji ROM 26 is used to convert a kanji character code into a kanji character pattern. The dictionary ROM 27 is used to execute kana-to-kanji conversion.

The PS-IF 28 executes serial data transmission to the PC-CPU 30a of the power supply circuit 30. The AC adapter 29 rectifies and smooths an AC voltage from an external power supply and then supplies a predetermined direct current (DC) voltage to the power supply circuit 30. The power supply circuit 30 supplies a driving voltage to each of the components of the computer system.

The M-BATs 31A and 31B can be charged and each are formed as a packed unit attachable/detachable to/from the computer system body. When the computer system is driven, one of the batteries is selected by the power supply circuit 30, and the driving voltage is supplied from the selected battery to the components. If the battery supplying the driving voltage reaches the limits of usage, that is, if the battery is in a low battery state, the battery is changed to the other battery, by which the driving voltage is to be supplied. Like these M-BATs 31A and 31B, the S-BAT 31C can be charged and is used to supply the backup voltage $V_{BK}$ to the components such as RAMs 13 and 18, backup RAM 19, and VRAM 25, which need to be backed up.

The computer system further comprises an extended bus connector (EBC) 40, a hard disk drive interface 41, and a system state display section 50 for displaying the states of the system.

The EBC 40 is used to extend the functions of the computer system. An externally-set hard disk drive (not shown) is selectively connected to the EBC 40. Otherwise, an extended unit (not shown) having various types of components such as a keyboard, a CRT display, a memory, and a connecting portion for coupling the extended unit to the computer system body, can selectively be connected to the EBC 40.

The hard disk drive interface 41 is used to couple an internally-set hard disk drive 100 to the computer system body by a connector 42.

The system state display section 50 includes a plurality of light emitting diodes (LEDs) L1 to L9 operated in accordance with control of the PC-CPU 30a of the power supply circuit 30.

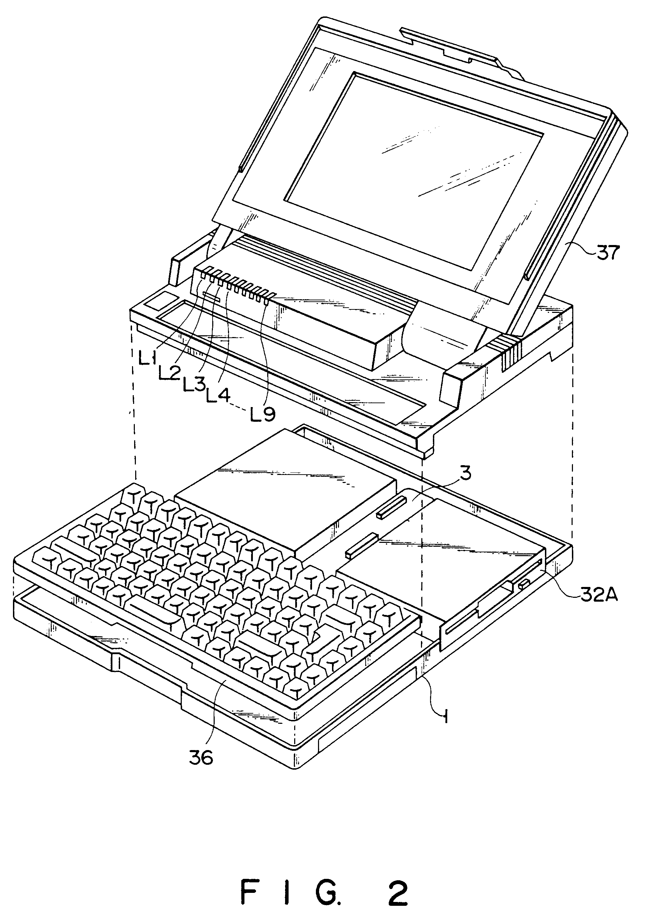

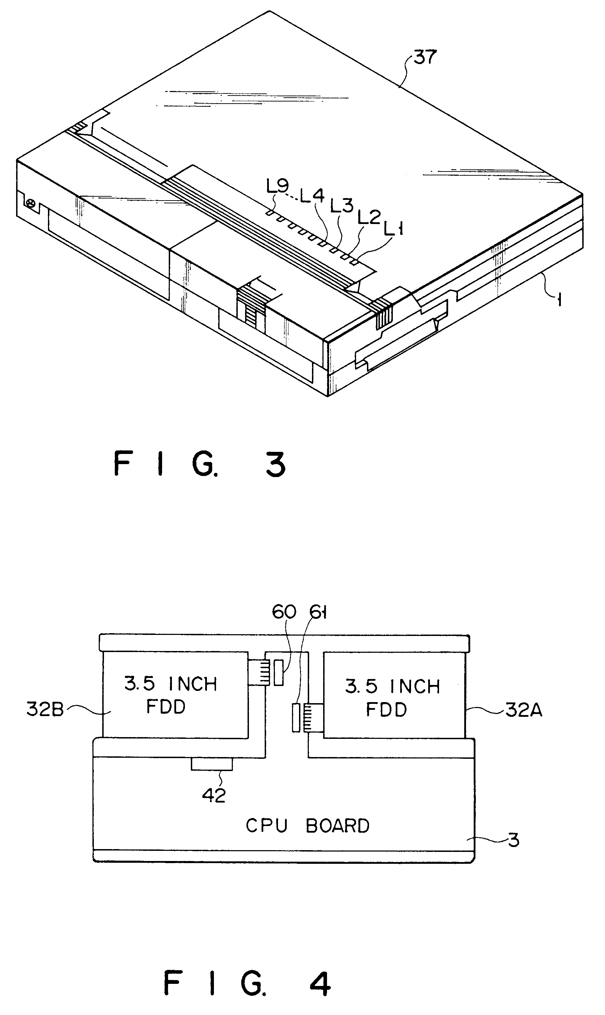

Fig. 2 is a perspective view showing an appearance and a configuration of the computer system in which a display is opened, and Fig. 3 is a perspective view showing an appearance of the computer system in which the display is closed. As shown in Fig. 2, a CPU board 3 and a keyboard 36 are arranged on the computer system body 1.

Fig. 4 is a view showing an arrangement of two 3.5-inch floppy disk drives 32A and 32B included in a computer system.

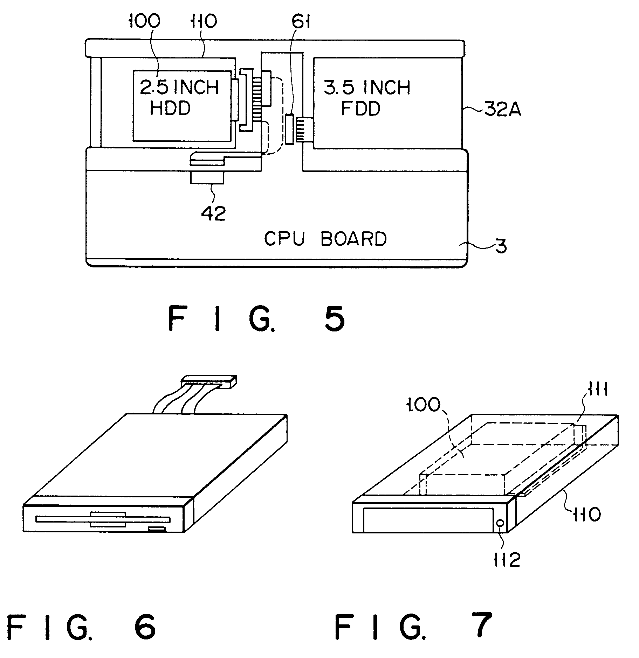

In order to advance the computer system (including two floppy disk drives) as shown in Fig. 4 to a computer system (including a floppy disk drive and a hard disk drive) as shown in Fig. 5, the floppy disk drive 32B is disconnected from the connector 60 and a hard disk drive 100 is connected to the connector 42. The computer system including the floppy disk drives 32A and 32B can thus be changed to the computer system including the floppy disk drive 32A and the hard disk drive 100.

Fig. 6 is a view showing an appearance of the floppy disk drive, and Fig. 7 is a view showing an appearance and a configuration of the hard disk drive 100. The hard disk drive 100 has a packed structure and is housed in a housing 110 having substantially the same shape as that of the floppy disk drive shown in Fig. 6. The hard disk drive 100 is placed on a tray 111, and it can be taken out from the housing 110 by a button 112 with the hard disk drive 100 placed on the tray 111. The hard disk drive 100 housed in the housing 110 can be connected to the EBC 40 as the externally-set hard disk drive.

The hard disk drive can thus be used in a plurality of computer systems. Furthermore, specific software, a large amount of data, etc. can be used in the computer systems.

As described above, in the present invention, a computer system including two floppy disk drive is changed to a computer system including a floppy disk drive and a hard disk drive. Therefore, an advanced computer system can be constructed simply, easily, and inexpensive. Further, since the hard disk drive need not couple to a computer system body through a connector, a cable, and the like, the characteristics of the lap-top type computer, such as miniaturization, lightness and portability are not lost.

## Claims

1. A computer system characterized by comprising:

a computer body (1) having two floppy disk connectors (60, 61) and a hard disk connector (42); and

at least one floppy disk drive (32A; 32B) connected to at least one of the floppy disk connectors (60, 61) and included in the computer body (1); and

wherein when a hard disk drive (100) is to be connected to the hard disk connector (42) and two floppy disk drives (32A, 32B) have connected to the floppy disk connectors (60, 61), one of the floppy disk drives (32A, 32B) is disconnected from one of the floppy disk connectors (60, 61) to which the one floppy disk drive (32A; 32B) has connected, the disconnected floppy disk drive (32A, 32B) is removed from the computer body (1), and the hard disk drive (100) is connected to the hard disk connector (42) and set in the computer body (1).

2. The system according to claim 1, characterized in that the computer body (1) has a space housing the two floppy disk drives (32A, 32B).

3. The system according to claim 1, characterized in that the computer body (1) has a space housing one of the two floppy disk drives (32A, 32B) and the hard disk drive (100).

4. A computer system characterized by comprising: a computer body (1); and

at least one floppy disk drive (32A; 32B) housed in the computer body (1), and

wherein when a hard disk drive (100) is to be housed in the computer body (1) and two floppy disk drives (32A, 32B) have housed in the computer body (1), one of the housed floppy disk drives (32A, 32B) is removed from the computer body (1), the hard disk drive (100) is set into a space in which the floppy disk drive (32A, 32B) to be removed has housed.

5. The system according to claim 4, characterized in that the computer body has a space housing the two floppy disk drives (32A, 32B).

6. The system according to claim 4, characterized in that the computer body (1) has a space housing one of the two floppy disk drives (32A, 32B) and the hard disk drive (100).

F I G. 1

L1
L2
L3
L4
L9

37

3

32A

1

36

F I G. 2

37

L9 L4 L3 L2 L1

1

# F I G. 3

60 61

| 3.5 INCH FDD | 3.5 INCH FDD |

32B

32A

42

CPU BOARD

3

# F I G. 4

100   110              61

```
        ┌──────────┐      ┌──────────────┐
        │ 2.5 INCH │      │  3.5 INCH    │
        │   HDD    │      │    FDD       │  ~32A
        └──────────┘      └──────────────┘
```

42

CPU  BOARD                              3

## F I G.  5

## F I G.  6

100                      111

110

112

## F I G.  7